# EUROPÄISCHE PATENTSCHRIFT

(11) **EP 3 069 163 B1**
(45) Veröffentlichungstag und Bekanntmachung des Hinweises auf die Patenterteilung: **23.08.2017**
(21) Anmeldenummer: 15721584.9
(22) Anmeldetag: 17.04.2015
(51) Int. Cl.: G01S 15/04, G01S 17/02, G01S 17/08, G01S 7/48, G01S 7/52, G01S 15/08

(54) **SENSOR ZUM NACHWEIS VON OBJEKTEN IN EINEM ÜBERWACHUNGSBEREICH**
SENSOR FOR DETECTING OBJECTS IN A MONITORED REGION
CAPTEUR SERVANT À DÉTECTER DES OBJETS DANS UNE ZONE DE SURVEILLANCE

(30) Priorität: 17.04.2014 DE 102014005752
(43) Veröffentlichungstag der Anmeldung: 21.09.2016
(73) Patentinhaber: Pepperl & Fuchs GmbH, 68307 Mannheim (DE)
(72) Erfinder: HAGEMANN, Arno, 22049 Hamburg (DE); SATZKY, Uwe, 22455 Hamburg (DE); SCHRÖDER, Thorsten, 12621 Berlin (DE); TABEL, Ernst, 22337 Hamburg (DE); JAAP, Holger, 21502 Geesthacht (DE)
(74) Vertreter: Schiffer, Axel Martin
(86) Internationale Anmeldenummer: PCT/EP2015/058385
(87) Internationale Veröffentlichungsnummer: WO 2015/158893

(56) Entgegenhaltungen:
- EP-A1- 2 056 125
- DE-A1- 19 754 963
- DE-A1-102007 008 400
- DE-U1-202009 005 480

## Beschreibung

Die vorliegende Erfindung bezieht sich auf einen Sensor zum Nachweis von Objekten in einem Überwachungsbereich nach dem Oberbegriff des Anspruchs 1.

Solche Sensoren sind bekannt und weisen folgende Komponenten auf: Eine Sendeeinheit zum Aussenden von Strahlung, insbesondere Licht, in den Überwachungsbereich, eine Detektoreinheit zum Nachweisen von von einem nachzuweisenden Objekt im Überwachungsbereich reflektierter oder gestreuter Strahlung, eine Steuer- und Auswerteeinheit zum Ansteuern der Sendeeinheit und zum Auswerten der von der Detektoreinheit nachgewiesenen Strahlung. Die Steuer- und Auswerteeinheit ist dazu eingerichtet, auf Grundlage der von der Detektoreinheit nachgewiesenen Strahlung einen Abstand zwischen dem Objekt und der Detektoreinheit zu bestimmen und ein Nachweissignal auszugeben, wenn der Abstand größer oder kleiner als ein festzulegender Schaltabstand ist. Außerdem ist eine mit der Steuer- und Auswerteeinheit zusammenwirkende Einstelleinrichtung mit einem manuell betätigbaren Bedienmittel zum Einstellen des Schaltabstands vorhanden.

Hintergrund der Erfindung ist, dass Sensoren zum Nachweis von Objekten häufig auf sogenannte Schaltpunkte eingestellt werden. Hierfür werden verschiedene Mensch-Maschinen-Schnittstellen angeboten. Im Wesentlichen hat sich durchgesetzt, dass mit Hilfe eines Tasters ein gewünschter Schaltpunkt eingelernt wird. Außerdem werden Drehpotentiometer verwendet, um einen Schaltpunkt einzustellen.

In DE 10 2007 008 400 A1 ist ein optischer Sensor beschrieben, bei dem mit Hilfe eines Einstellelements, welches in eine erste und in eine zweite Richtung drehbar ist, ein erster und ein zweiter Kontakt betätigt werden kann.

Gegenstand von DE 10 2007 051 979 A1 ist optischer Sensor, bei dem mit einer Taste eine Schaltschwelle zu größeren oder kleineren Werten verändert werden kann.

In DE 20 2008 005 679 U1 ist eine Entfernungsmessungs-Vorrichtung mit einem integrierten Berührungsfeld, insbesondere einem Touch-Screen, beschrieben, über welchen eine Bedienung der Vorrichtung möglich ist.

DE 20 2012 102 331 U1 schließlich offenbart einen optischer Taster, bei dem eine erste Tastweite mit einem ersten Potentiometer und eine zweite Tastweite mit einem zweiten Potentiometer eingestellt werden kann. Abhängig von den eingestellten Tastweiten kann von der Auswerteeinheit ein Schaltsignal ausgegeben werden.

Als eine **Aufgabe** der Erfindung kann angesehen werden, die Bedienbarkeit des Sensors im Hinblick auf das Einstellen eines Schaltabstands zu verbessern.

Diese Aufgabe wird durch den Sensor mit den Merkmalen des Anspruchs 1 gelöst.

Der Sensor der oben angegebenen Art ist erfindungsgemäß dadurch weitergebildet, dass die Einstelleinrichtung dergestalt eingerichtet ist, dass der Schaltabstand durch manuelles Betätigen des Bedienmittels in einem Einstellmodus verstellbar ist und dass durch manuelles Betätigen des Bedienmittels in einem Übernahmemodus als Schaltabstand ein aktuell auf Grundlage der von der Detektoreinheit nachgewiesenen Strahlung bestimmter Abstand zwischen dem Objekt und der Detektoreinheit übernommen wird.

Vorteilhafte Ausführungsbeispiele des erfindungsgemäßen Sensors werden im Folgenden, insbesondere im Zusammenhang mit den abhängigen Ansprüchen und der Figur beschrieben.

Als ein Kerngedanke der vorliegenden Erfindung kann angesehen werden, dass mit ein- und demselben Bedienmittel, das auch als Bedienelement, Betätigungselement oder Betätigungsmittel bezeichnet werden kann, verschiedene Funktionalitäten erreicht werden. Dadurch können der vorrichtungsmäßige Aufwand und damit die Kosten reduziert werden.

Als ein weiterer Kerngedanke der vorliegenden Erfindung kann erachtet werden, dass ein Übernahmemodus bereitgestellt wird, mit dem ein Abstand zwischen dem Objekt und der Detektoreinheit, der aktuell, also zum Zeitpunkt der Betätigung des Bedienmittels, auf Grundlage der von der Detektoreinheit nachgewiesenen Strahlung bestimmt wird, als Schaltabstand übernommen wird.
Die Bedienung ist im Vergleich zu bekannten Lösungen auch ergonomisch einfacher, weil nur ein einziges Bedienmittel betätigt werden muss.
Bei der verwendeten Strahlung kann es sich insbesondere um elektromagnetische Strahlung handeln, wobei hierunter im Rahmen der vorliegenden Anmeldung sichtbares Licht, Infrarotlicht und auch ultraviolettes Licht verstanden werden soll. Die Erfindung kann deshalb besonders vorteilhaft eingesetzt werden, wenn der Sensor ein optischer Sensor, insbesondere mit Hintergrundausblendung und insbesondere ein Sensor nach dem Lichtlaufzeitprinzip, ein Sensor nach dem Prinzip der Phasenmessung oder ein Triangulationssensor ist. Im Fall der Verwendung von Licht können für die Sendeeinheit prinzipiell bekannte Sender, wie Leuchtdioden oder Laser, verwendet werden. Ebenso kommen für die Detektoreinheit grundsätzlich bekannte Komponenten, wie Photodioden und sonstige Halbleiterdetektoren zum Einsatz.
Prinzipiell kann der Sensor aber auch ein Ultraschallsensor sein und bei der Strahlung handelt es sich dann um Ultraschallwellen. Die für den Fall der Benutzung von Ultraschallwellen zu verwendenden Sender und Empfänger sind ebenfalls bekannt. Die Steuer- und Auswerteinheit kann prinzipiell mit Hilfe eines Mikrocontrollers oder einer vergleichbaren, insbesondere programmierbaren, Komponente gebildet sein. Erfindungsgemäß ist das Bedienmittel ein Drehknopf, in weiteren Beispielen ein Schiebeschalter, ein Taster und/oder ein Touchpad. Insbesondere kann genau ein Drehknopf, genau ein Schiebeschalter, genau ein Taster und/oder genau ein Touchpad zum Einsatz kommen. Besonders bevorzugt werden kontinuierlich arbeitende Drehknöpfe oder kontinuierlich arbeitende Schiebeschalter verwendet, wobei dabei solche Komponenten als kontinuierlich arbeitend angesehen werden, die keine Schalt- oder Rastpunkte aufweisen.

Zum Erfassen und Übertragen einer Drehstellungsinformation und/oder einer Drehweginformation kann bevorzugt ein inkrementeller Drehgeber und/oder ein Drehpotentiometer vorhanden sein, der beziehungsweise das mit dem Drehknopf und der Steuer- und Auswerteeinheit zusammenwirkt.
Entsprechend kann zum Erfassen und Übertragen einer Schiebstellung oder eines Verschiebewegs ein inkrementeller Weggeber und/oder Schiebpotentiometer vorhanden sein, der beziehungsweise das mit dem Schiebschalter und der Steuer- und Auswerteeinheit zusammenwirkt.
Prinzipiell können die Betätigungen des Drehknopfs in beliebiger Weise bestimmten Funktionen, beispielsweise dem Einstellmodus oder dem Übernahmemodus, zugeordnet werden. Erfindungsgemäß ist der Einstellmodus gebildet durch Drehen des Drehknopfs mit einer ersten Drehgeschwindigkeit, die in einem ersten festzulegenden Intervall von Drehgeschwindigkeiten liegt, und der Übernahmemodus gebildet durch Drehen des Drehknopfs mit einer zweiten Drehgeschwindigkeit, die größer als die erste Drehgeschwindigkeit ist und in einem zweiten festzulegenden Intervall von Drehgeschwindigkeiten liegt.
Hiermit korrespondiert eine Variante bei Verwendung eines Schiebeschalters, bei der der Einstellmodus gebildet ist durch Verschieben des Schiebeschalters mit einer ersten Schiebegeschwindigkeit, die in einem ersten festzulegenden Intervall von Schiebegeschwindigkeiten liegt und bei der der Übernahmemodus gebildet ist durch Verschieben des Schiebschalters mit einer zweiten Schiebegeschwindigkeit, die größer als die erste Schiebegeschwindigkeit ist und in einem zweiten festzulegenden Intervall von Schiebegeschwindigkeiten liegt.

Weiterhin korrespondieren diese Varianten mit einem Beispiel, bei dem ein Taster verwendet wird und bei welchem der Einstellmodus gebildet ist durch Betätigen des Tasters in einem ersten Tastmuster, insbesondere mit einer ersten Tastfrequenz, die in einem ersten festzulegenden Tastfrequenzintervall liegt und wobei der Übernahmemodus gebildet ist durch das Betätigen des Tasters in einem zweiten Tastmuster, insbesondere mit einer zweiten Tastfrequenz, die größer als die erste Tastfrequenz ist und in einem zweiten festzulegenden Tastfrequenzintervall liegt. Beispielsweise kann das erste Tastmuster darin bestehen, dass der Taster mit einer vergleichsweise geringen Tastfrequenz betätigt wird und dass jeder Tastvorgang eine Veränderung des Schaltabstands um ein bestimmtes Inkrement nach sich zieht. Der Übernahmemodus könnte beispielsweise verwirklicht sein durch eine bestimmte rasche Tastabfolge. Beispielsweise könnte rasches zweimaliges Tasten, vergleichbar einem Doppelklick bei einer Computermaus, zur Übernahme eines aktuell gemessenen Schaltabstands führen.

Für den Fall der Verwendung eines Touchpads kann der Einstellmodus gebildet sein durch Betätigen des Touchpads in einem ersten Wischmuster, insbesondere mit einer ersten Wischgeschwindigkeit, die in einem ersten festzulegenden Intervall von Wischgeschwindigkeiten liegt und der Übernahmemodus kann gebildet sein durch Betätigen des Touchpads in einem zweiten Wischmuster, insbesondere mit einer zweiten Wischgeschwindigkeit, die größer als die erste Wischgeschwindigkeit ist und die in einem zweiten festzulegenden Intervall von Wischgeschwindigkeiten liegt.

Ganz allgemein sind demgemäß Varianten bevorzugt und zweckmäßig, bei denen der Übernahmemodus, also der Modus, bei dem ein zum Betätigungszeitpunkt gemessener Abstand zu einem Objekt als Schaltabstand übernommen wird, durch eine rasche, schnelle oder auch ruckartige Bewegung des Bedienmittels verwirklicht wird. Besonders bevorzugt ist eine Ausgestaltung, bei der der Übernahmemodus gebildet wird durch sehr rasches oder ruckartiges Drehen eines Drehknopfs als Bedienmittel. Beispielsweise kann die Drehgeschwindigkeit im Übernahmemodus etwa um einen Faktor drei größer sein als die Drehgeschwindigkeit im Einstellmodus. Dementsprechend kann bei Verwendung eines Schiebeschalters die Schiebegeschwindigkeit im Übernahmemodus etwa um einen Faktor drei größer sein als im Einstellmodus. Ganz allgemein werden die Drehgeschwindigkeitsintervalle, die Schiebegeschwindigkeitsintervalle, die Tastfrequenzintervalle und die Wischgeschwindigkeitsintervalle zweckmäßig so gewählt, dass die jeweils relevanten Drehgeschwindigkeiten, Schiebegeschwindigkeiten, Tastfrequenzen und Wischgeschwindigkeiten von einem Benutzer einerseits gut manuell realisiert werden können und andererseits hinreichend weit auseinanderliegen, um eine eindeutige Bedienung zu ermöglichen.

Besonders gut lässt sich dies mit Drehknöpfen verwirklichen, wenn der Übernahmemodus durch sehr rasches Drehen des Drehknopfs gebildet ist und der Benutzer dann sehr einfach durch langsames Drehen eine Feineinstellung eines im Übernahmemodus übernommenen Objektabstands als Schaltabstand vornehmen kann.

Besonders zweckmäßig ist außerdem, wenn im Übernahmemodus die Übernahme eines aktuell gemessenen Abstands zu einem Objekt mit Hilfe von optischen oder akustischen Anzeigemitteln dem Benutzer angezeigt werden.

Eine noch bessere Bedienbarkeit und Handhabbarkeit des erfindungsgemäßen Sensors wird erreicht, wenn ein Feineinstellmodus gebildet ist durch Drehen des Drehknopfs mit einer dritten Drehgeschwindigkeit, die kleiner ist als die erste Drehgeschwindigkeit und die in einem dritten festzulegenden Intervall von Drehgeschwindigkeiten liegt, wobei im Feineinstellmodus ein bestimmter Drehwinkel des Drehknopfs auf ein kleineres Intervall des Schaltabstands abgebildet wird als im Einstellmodus.

Damit die Zuordnung der jeweiligen Schiebevorgänge, Wischvorgänge oder Drehvorgänge bei dem Bedienmittel jeweils eindeutig zugeordnet werden kann, werden jeweils geeignete Intervalle von Dreh-, Schieb- oder Wischgeschwindigkeiten definiert.

Für die Fälle, in denen ein Drehknopf, ein Schiebeschalter oder ein Touchpad verwendet wird, ist die Steuer- und Auswerteeinheit besonders bevorzugt so eingerichtet, dass ein bestimmter Drehhub des Drehknopfs, ein bestimmter Verschiebeweg des Schiebeschalters und ein bestimmter Wischweg auf dem Touchpad auf ein festzulegendes Intervall des Schaltabstands abgebildet wird.

Bei den Varianten, bei denen ein Schiebeschalter oder ein Touchpad verwendet wird, können dementsprechend ebenfalls Feineinstellmodi gebildet sein, wobei dann ein bestimmter Verschiebeweg des Schiebeschalters oder ein bestimmter Wischweg auf dem Touchpad je nach Verschiebegeschwindigkeit und je nach Wischgeschwindigkeit auf unterschiedliche Intervalle des Schaltabstands abgebildet werden. Konkret kann dies bedeuten, dass bei sehr langsamem Betätigen des Schiebeschalters ein bestimmter Verschiebeweg auf ein kleineres Intervall des Schaltabstands abgebildet wird als bei rascherem Verschieben des Schiebeschalters und entsprechend bei langsamem Wischen auf dem Touchpad ein bestimmter Wischweg auf dem Touchpad auf ein kleineres Intervall des Schaltabstands abgebildet wird als bei rascherem Wischen auf dem Touchpad.

Weitere Verbesserungen der Handhabbarkeit des erfindungsgemäßen Sensors können erreicht werden, wenn optische und/oder akustische Anzeigemittel vorhanden sind zum Anzeigen eines Betätigungsmodus des Bedienmittels und/oder eines Betriebsmodus des Sensors. Beispielweise können Leuchtdioden vorhanden sein, mit denen der Einstellmodus, der Übernahmemodus und ein Messmodus oder Messbetrieb angezeigt werden kann.

Bei einer weiteren zweckmäßigen Ausgestaltung des erfindungsgemäßen Sensors wird ein eingestellter Schaltabstand übernommen und der Sensor geht in den Messbetrieb über, wenn über eine festzulegende Zeitspanne, beispielsweise 5 Sekunden, keine manuelle Betätigung des Betätigungsmittels stattfindet. So kann gewährleistet werden, dass nach Betätigung des Betätigungsmittels im Übernahmemodus anschließend noch eine Einstellung im Einstellmodus oder in einem Feineinstellmodus vorgenommen werden kann.

Weitere Vorteile und Merkmale der vorliegenden Erfindung werden im Folgenden im Zusammenhang mit der beigefügten Figur beschrieben. Hierin zeigt:

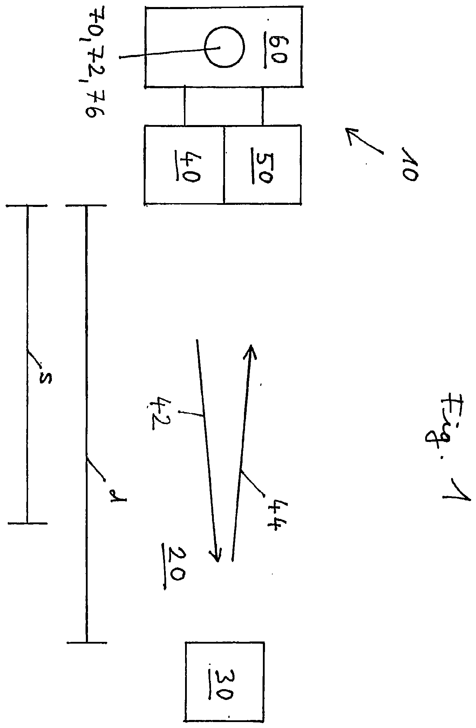

- Fig. 1:: Ein Ausführungsbeispiel eines erfindungsgemäßen Sensors.

Fig. 1 zeigt schematisch ein Ausführungsbeispiel eines erfindungsgemäßen Sensors 10, im gezeigten Beispiel eines optischen Sensors nach dem Lichtlaufzeitprinzip.

Als wesentliche Komponenten weist der erfindungsgemäße Sensor 10 eine Sendeeinheit 40, eine Detektoreinheit 50 und eine Steuer- und Auswerteeinheit 60 auf. Die Sendeeinheit 40 dient zum Aussenden von Licht 42 in einen Überwachungsbereich 20, in welchem sich ein nachzuweisendes Objekt 30 befindet. Im gezeigten Beispiel erfolgt dieses Aussenden in Form von Lichtpulsen. Die Detektoreinheit 50 dient zum Nachweisen von Strahlung 44, also von Lichtpulsen, die von dem nachzuweisenden Objekt 30 im Überwachungsbereich 20 reflektiert und/oder gestreut wurden.

Die Steuer- und Auswerteeinheit 60 wirkt mit der Sendeeinheit 40 und der Detektoreinheit 50 zusammen und dient zum Ansteuern der Sendeeinheit 40 und zum Auswerten der von der Detektoreinheit 50 nachgewiesenen Strahlung. Insbesondere ist die Steuer- und Auswerteeinheit erfindungsgemäß dazu eingerichtet, auf Grundlage der von der Detektoreinheit 50 nachgewiesenen Strahlung, im vorliegenden Fall auf Grundlage des Zeitpunkts des Nachweises der Lichtpulse und des Zeitpunkts des Aussendens dieser Lichtpulse und der Lichtgeschwindigkeit in dem Medium, beispielsweise Luft, einen Abstand zwischen dem Objekt 30 und der Detektoreinheit 50 zu bestimmen. Sodann wird ein Nachweissignal ausgegeben, beispielsweise an eine übergeordnete Steuerung, die in Fig. 1 nicht dargestellt ist, wenn der Abstand d des Objekts 30 zu der Detektoreinheit 50 größer oder kleiner als ein festzulegender Schaltabstand s ist. In der in Fig. 1 dargestellten Situation ist der Abstand d des Objekts 30 zu der Detektoreinheit 50 größer als der eingestellte Schaltabstand s. Der Abstand d und der eingestellte Schaltabstand s sind durch Abstandsbalken schematisch dargestellt.

Als wesentliche Komponente weist die Steuer- und Auswerteeinheit außerdem eine Einstelleinrichtung 72 mit einem manuell betätigbaren Bedienmittel 70 auf, welches zum manuellen Einstellen des Schaltabstands in einem Einstellmodus und außerdem zur Übernahme eines aktuell bestimmten Abstands eines Objekts als Schaltabstand dient, wenn das Bedienmittel in einem Übernahmemodus betätigt wird. Besonders bevorzugt ist außerdem, wenn ein eingestellter Schaltabstand abgespeichert wird, wenn über einen gewissen festzulegenden Zeitraum, beispielsweise 10 Sekunden, keine Betätigung des Bedienmittels erfolgt. Dies hat den Vorteil, dass keine weiteren Bedieneinrichtungen, beispielsweise ein Taster, mit dem eine Einstellung abgespeichert wird, notwendig sind.

Im gezeigten Bespiel handelt es sich bei dem manuell betätigbaren Bedienmittel 70 um einen Drehknopf 76, der mit einem nicht näher dargestellten inkrementalen Drehgeber verbunden ist. Die Inkrementalsignale werden dann von der Steuer- und Auswerteeinheit verarbeitet.

Grundsätzlich und unabhängig von dem hier gezeigten Ausführungsbeispiel kann der erfindungsgemäße Sensor auch eine Anzeigeeinrichtung aufweisen, auf welcher die eingestellten Parameter und/oder der Einstellvorgang als solcher wiedergegeben werden. Grundsätzlich kann eine Vielzahl weiterer Informationen, beispielsweise der aktuelle Schaltzustand des Sensors, angezeigt werden.

Ein wesentlicher Gedanke der vorliegenden Erfindung ist, dass ein einziges manuell betätigbares Bedienmittel, beispielsweise ein Drehknopf, eine Mehrzahl von Aufgaben übernimmt. Einerseits kann mit dem Drehknopf der Schaltpunkt stufenlos oder jedenfalls mit einer hinreichend kleinen Schrittweite, eingestellt werden. Andererseits kann, beispielsweise durch rasches Drehen ein Schaltpunkt gesetzt oder übernommen werden. Eine bevorzugte Weiterbildung der Erfindung besteht darin, dass neben dem Einstellmodus auch ein Feineinstellmodus vorhanden ist, in welchem durch weiteres, langsames Drehen des Drehknopfs eine Feineinstellung vorgenommen werden kann.

Mit der vorliegenden Erfindung können sehr große Regelbereiche bei gleichzeitig sehr feiner Einstellbarkeit erzielt werden. Die Bedienung ist sehr komfortabel, beispielsweise kann eine Abbildung des gesamten Einstellungsbereichs auf wenige Drehungen des Drehknopfs abgebildet werden. Für den Feineinstellbereich kann dann der auf eine Umdrehung des Schaltknopfs abgebildete Schaltabstandsbereich prinzipiell beliebig verkleinert werden. Insgesamt wird durch die vorliegende Erfindung eine sehr komfortable Bedienung erreicht, die intuitiv wie bei klassischen Bedienelementen vorgenommen werden kann.

## Patentansprüche

1. Sensor zum Nachweis von Objekten in einem Überwachungsbereich
mit einer Sendeeinheit (40) zum Aussenden von Strahlung, insbesondere Licht (42), in den Überwachungsbereich (20),
mit einer Detektoreinheit (50) zum Nachweisen von von einem nachzuweisenden Objekt (30) im Überwachungsbereich (20) reflektierter und/oder gestreuter Strahlung (44),
mit einer Steuer- und Auswerteeinheit (60) zum Ansteuern der Sendeeinheit (40) und zum Auswerten der von der Detektoreinheit (50) nachgewiesenen Strahlung,
wobei die Steuer- und Auswerteeinheit (60) dazu eingerichtet ist, auf Grundlage der von der Detektoreinheit (50) nachgewiesenen Strahlung einen Abstand (d) zwischen dem Objekt (30) und der Detektoreinheit (50) zu bestimmen und ein Nachweissignal auszugeben, wenn der Abstand (d) größer oder kleiner als ein festzulegender Schaltabstand (s) ist,
mit einer mit der Steuer- und Auswerteeinheit (60) zusammenwirkenden Einstelleinrichtung (72) mit einem manuell betätigbaren Bedienmittel (70) zum Einstellen des Schaltabstands,
wobei die Einstelleinrichtung (72) dergestalt eingerichtet ist,
dass der Schaltabstand durch manuelles Betätigen des Bedienmittels (70) in mindestens einem Einstellmodus kontinuierlich verstellbar ist,
dass durch manuelles Betätigen des Bedienmittels in einem Übernahmemodus ein aktuell auf Grundlage der von der Detektoreinheit (50) nachgewiesenen Strahlung bestimmter Abstand zwischen einem Objekt und der Detektoreinheit als Schaltabstand übernommen wird,
dass das Bedienmittel ein, bevorzugt genau ein, insbesondere kontinuierlich arbeitender, Drehknopf (76) ist und
dass der Einstellmodus gebildet ist durch Drehen des Drehknopfs (76) mit einer ersten Drehgeschwindigkeit, die in einem ersten festzulegenden Intervall von Drehgeschwindigkeiten liegt,
**dadurch gekennzeichnet,**
**dass** der Übernahmemodus gebildet ist durch Drehen des Drehknopfs (76) mit einer zweiten Drehgeschwindigkeit, die größer als die erste Drehgeschwindigkeit ist und in einem zweiten festzulegenden Intervall von Drehgeschwindigkeiten liegt.

2. Sensor nach Anspruch 1,
**dadurch gekennzeichnet,**
**dass** ein inkrementaler Drehgeber und/oder ein Drehpotentiometer vorhanden ist, der beziehungsweise das mit dem Drehknopf (76) und der Steuer- und Auswerteeinheit (60) zusammenwirkt.

3. Sensor nach Anspruch 1 oder 2,
**dadurch gekennzeichnet,**
**dass** ein Feineinstellmodus gebildet ist, durch Drehen des Drehknopfs mit einer dritten Drehgeschwindigkeit, die kleiner ist als die erste Drehgeschwindigkeit und in einem dritten festzulegenden Intervall von Drehgeschwindigkeiten liegt und dass im Feineinstellmodus ein bestimmter Drehwinkel des Drehknopfs auf ein kleineres Intervall des Schaltabstands abgebildet wird als bei dem Einstellmodus.

4. Sensor nach einem der Ansprüche 1 bis 3,
**dadurch gekennzeichnet,**
**dass** optische und/oder akustische Anzeigemittel vorhanden sind zum Anzeigen eines Betätigungsmodus des Bedienmittels (70) und/oder eines Betriebsmodus des Sensors.

5. Sensor nach einem der Ansprüche 1 bis 4,
**dadurch gekennzeichnet,**
**dass** er ein optischer Sensor, insbesondere mit Hintergrundausblendung und insbesondere ein Sensor nach dem Lichtlaufzeitprinzip, ein Sensor nach dem Prinzip der Phasenmessung oder ein Triangulationssensor, ist.

6. Sensor nach einem der Ansprüche 1 bis 4,
**dadurch gekennzeichnet,**
**dass** er ein Ultraschallsensor ist.

7. Sensor nach einem der Ansprüche 1 bis 6,
**dadurch gekennzeichnet,**
**dass** ein eingestellter Schaltabstand (s) übernommen wird und der Sensor in einen Messbetrieb übergeht, wenn über eine festzulegende Zeitspanne keine manuelle Betätigung des Bedienmittels (70) stattfindet.

## Claims

1. Sensor for detecting objects in a monitored region, having
a transmission unit (40) for emitting radiation, in particular light (42), into the monitored region (20),
a detector unit (50) for detecting radiation (44) reflected and / or scattered by an object (30) to be detected in the monitored region (20),
a control and evaluation unit (60) for controlling the transmission unit (40) and for evaluating the radiation detected by the detector unit (50), wherein the control and evaluation unit (60) is configured, based on the radiation detected by the detector unit (50), to determine a distance (d) between the object (30) and the detector unit (50) and to output a detection signal if the distance (d) is greater than or less than a switching distance (s) to be specified,
a setting means (72) cooperating with the control and evaluation unit (60), having a manually actuated operating means (70) for setting the switching distance,
wherein the setting means (72) is configured such that
the switching distance is continuously adjustable by manual actuation of the operating means (70) in at least one setting mode,
through manual actuation of the operating means in an acquisition mode, a distance, currently determined based on the radiation detected by the detector unit (50), between an object and the detector unit is acquired as the switching distance,
the operating means is a, preferably precisely one, in particular continuously working, rotary knob (76) and
the setting mode is formed by turning the rotary knob (76) with a first rotation speed, which lies in a first interval of rotation speeds to be specified,
**characterised in that**
the acquisition mode is formed by turning the rotary knob (76) with a second rotation speed, which is greater than the first rotation speed and lies in a second interval of rotation speeds to be specified.

2. Sensor according to claim 1,
**characterised in that**
an incremental rotary encoder and / or a rotary potentiometer is / are present, which cooperate(s) with the rotary knob (76) and the control and evaluation unit (60).

3. Sensor according to claim 1 or 2,
**characterised in that**
a fine adjustment mode is formed by turning the rotary knob with a third rotation speed, which is lower than the first rotation speed and lies in a third interval of rotation speeds to be specified and
in the fine adjustment mode, a certain angle of rotation of the rotary knob is mapped to a smaller interval of the switching distance than in the setting mode.

4. Sensor according to one of claims 1 to 3,
**characterised in that**
optical and / or acoustic display means are present for displaying an actuation mode of the operating means (70) and / or an operating mode of the sensor.

5. Sensor according to one of claims 1 to 4,
**characterised in that**
it is an optical sensor, in particular with background suppression, and in particular a sensor according to the light transit time principle, a sensor according to the principle of phase measurement or a triangulation sensor.

6. Sensor according to one of claims 1 to 4,
**characterised in that**
it is an ultrasonic sensor.

7. Sensor according to one of claims 1 to 6,
**characterised in that**
a set switching distance (s) is acquired and the sensor goes into a measuring operation if no manual actuation of the operating means (70) takes place over a timespan to be specified.

## Revendications

1. Capteur servant à démontrer la présence d'objets dans une zone de surveillance avec une unité émettrice (40) servant à envoyer un rayonnement, en particulier de la lumière (42), dans la zone de surveillance (20),
avec une unité de détection (50) servant à démontrer la présence d'un rayonnement (44) réfléchi et/ou diffusé par un objet (30) dont la présence est à démontrer dans la zone de surveillance (20),
avec une unité de commande et d'analyse (60) servant à piloter l'unité émettrice (40) et servant à analyser le rayonnement dont la présence a été démontrée par l'unité de détection (50),
dans lequel l'unité de commande et d'analyse (60) est mise au point pour définir, sur la base du rayonnement dont la présence a été démontrée par l'unité de détection (50), une distance (d) entre l'objet (30) et l'unité de détection (50) et pour émettre un signal de démonstration de présence quand la distance (d) est plus grande ou plus petite qu'une distance de commutation (s) à fixer,
avec un dispositif de réglage (72) coopérant avec l'unité de commande et d'analyse (60), pourvu d'un moyen d'utilisation (70) pouvant être actionné manuellement, servant à régler la distance de commutation,
dans lequel le dispositif de réglage (72) est mis au point de telle manière que la distance de commutation peut être ajustée en continu par un actionnement manuel du moyen d'utilisation (70) dans au moins un mode de réglage,
qu'une distance définie de manière instantanée sur la base du rayonnement dont la présence a été démontrée par l'unité de détection (50) entre un objet et l'unité de détection est reprise en tant que distance de commutation par un actionnement manuel du moyen d'utilisation dans un mode de reprise,
que le moyen d'utilisation est un bouton rotatif (76), de manière préférée précisément au nombre de un, fonctionnant en particulier en continu, et
que le mode de réglage est formé par une rotation du bouton rotatif (76) à une première vitesse de rotation, qui se situe dans un premier intervalle à fixer de vitesses de rotation,
**caractérisé en ce**
**que** le mode de reprise est formé par la rotation du bouton rotatif (76) à une deuxième vitesse de rotation, qui est plus grande que la première vitesse de rotation et qui se situe dans un deuxième intervalle à fixer de vitesses de rotation.

2. Capteur selon la revendication 1,
**caractérisé en ce**
**qu'**un transmetteur de rotation incrémental et/ou un potentiomètre rotatif sont présents, lesquels coopèrent avec le bouton rotatif (76) et l'unité de commande et d'analyse (60).

3. Capteur selon la revendication 1 ou 2,
**caractérisé en ce**
**qu'**un mode de réglage fin est formé par la rotation du bouton rotatif à une troisième vitesse de rotation, qui est inférieure à la première vitesse de rotation et qui se situe dans un troisième intervalle à fixer de vitesses de rotation, et
**que** dans le mode de réglage fin, un angle de rotation défini du bouton rotatif est reproduit sur une fourchette plus petite de la distance de commutation que dans le mode de réglage.

4. Capteur selon l'une quelconque des revendications 1 à 3,
**caractérisé en ce**
**que** des moyens d'affichage optiques et/ou acoustiques sont présents afin d'afficher un mode d'actionnement du moyen d'utilisation (70) et/ou un mode de fonctionnement du capteur.

5. Capteur selon l'une quelconque des revendications 1 à 4,
**caractérisé en ce**
**qu'**il s'agit d'un capteur optique, en particulier avec suppression de l'arrière-plan et en particulier un capteur selon le principe de temps de propagation, un capteur selon le principe de la mesure de phases ou un capteur de triangulation.

6. Capteur selon l'une quelconque des revendications 1 à 4,
**caractérisé en ce**
**qu'**il s'agit d'un capteur à ultrasons.

7. Capteur selon l'une quelconque des revendications 1 à 6,
**caractérisé en ce**
**qu'**une distance de commutation (s) réglée est reprise, et le capteur passe à un mode de mesure quand aucun actionnement manuel du moyen d'utilisation (70) n'a lieu dans un laps de temps à fixer.
